# EUROPÄISCHE PATENTSCHRIFT

(11) **EP 2 271 447 B1**
(45) Veröffentlichungstag und Bekanntmachung des Hinweises auf die Patenterteilung: **13.06.2012**
(21) Anmeldenummer: 09742004.6
(22) Anmeldetag: 28.04.2009
(51) Int. Cl.: B21D 22/20, B32B 15/08, B29C 53/04

(54) **Verfahren zum Formen eines Bördelfalzes in ein mehrlagiges Verbundmaterial**
Method for forming a crimping fold in a multi-layer composite material
Procédé pour former une partie bordée dans un matériau composite multicouche

(30) Priorität: 09.05.2008 DE 102008023017
(43) Veröffentlichungstag der Anmeldung: 12.01.2011
(73) Patentinhaber: ThyssenKrupp Steel Europe AG, 47166 Duisburg (DE)
(72) Erfinder: Böger, Thorsten, 47226 Duisburg (DE); Hilfrich, Erik, 40470 Düsseldorf (DE); Kleinschmidt, Oliver, 44137 Dortmund (DE)
(74) Vertreter: Cohausz & Florack
(86) Internationale Anmeldenummer: PCT/EP2009/055158
(87) Internationale Veröffentlichungsnummer: WO 2009/135786

(56) Entgegenhaltungen:
- DE-A1- 10 333 678
- DE-A1- 19 919 783
- DE-B- 1 254 110
- DE-B1- 1 527 957
- US-A- 5 354 522
- US-B1- 6 592 968

## Beschreibung

Die Erfindung betrifft ein Verfahren zum Formen eines Bördelfalzes in ein mehrlagiges Verbundmaterial, welches wenigstens eine Kernlage aus einem Kunststoff und wenigstens zwei Decklagen aus einem metallischen Werkstoff aufweist.

Mehrlagige Verbundmaterialien sind aus dem Stand der Technik bekannt. Die koreanische Veröffentlichung mit der Nummer 10 2005 0027702 A beispielsweise offenbart ein Dachelement einer Fahrzeugkarosserie, in welchem ein dreilagiges, mit einem Umschlag versehenes Verbundmaterial angeordnet ist. Das Verbundmaterial weist dabei eine Kernlage aus einem Kunstharz, insbesondere Polypropylen, auf. Im Allgemeinen wird mittels der Kernlage aus einem Kunststoff und den beiden Decklagen aus einem metallischen Werkstoff ein vorteilhafter Ausgleich zwischen dem Gewicht und der Steifigkeit bzw. Festigkeit des Verbundmaterials geschaffen. Die Beanspruchung der Kernlage ist bei typischen Belastungen geringer als die der Decklage, so dass für die Kernlage ein Kunststoff ausgewählt werden kann, welcher sich im Wesentlichen durch seine gegenüber Metallwerkstoffen geringe Dichte und damit sein geringes Gewicht auszeichnet. Darüber hinaus weisen Verbundmaterialien dieses Typs wärmedämmende sowie vibrationsdämpfende Eigenschaften auf.

Die deutsche Auslegeschrift 1 527 957 wiederum offenbart ein dreilagiges Verbundmaterial mit zwei äußeren Blechlagen und einer Kernlage aus einem Kunststoff, beispielsweise mit Zusätzen versehenes Polyvinylacetat, welches tiefgezogen wird. Zum Zwecke der Verringerung der Viskosität der Kunststoffkernlage soll der Tiefziehvorgang bei einer Temperatur von 120°C bis 160°C erfolgen. Insbesondere das Grenzziehverhältnis soll durch diese Maßnahme erhöht werden können. Die beim Tiefziehen erzeugten Umformradien sind jedoch gegenüber den Radien von Umschlägen bzw. Bördelfalzen deutlich größer, weshalb die Beanspruchung des Materials der einzelnen Lagen im Bereich des Umformbogens beim Tiefziehen deutlich geringer als beim Einarbeiten eines Bördelfalzes oder Umschlags ist. Da ferner die Kunststoffkernlage, anders als in der DE 1 527 957 dargestellt, zumeist eine deutliche größere Dicke als die Decklagen aufweist, sind die Decklagen gegenüber der beim Umformen ausgeübten Belastung überproportional anfällig, weshalb es an den Decklagen zu einem Materialversagen, beispielsweise Brüchen, Rissen oder ähnlichem, kommen kann.

Die US-A-5 354 522 offenbart ein Verfahren zum Formen eines Bördelfalzes in ein mehrlagiges Verband-material, bei dem die Oberflächenbereiche der Kernschicht erweicht werden.

Der vorliegenden Erfindung liegt somit die Aufgabe zu Grunde, ein Verfahren zum Formen eines Bördelfalzes in ein mehrlagiges Verbundmaterial anzugeben, welches eine hohe Prozesssicherheit und eine optimale Integrität des geformten mehrlagigen Verbundmaterials gewährleistet. Ferner liegt der vorliegenden Erfindung die Aufgabe zu Grunde, ein entsprechend geformtes mehrlagiges Verbundmaterial anzugeben.

Die Aufgabe der vorliegenden Erfindung wird durch ein Verfahren zum Formen eines Bördelfalzes in ein mehrlagiges Verbundmaterial, welches wenigstens eine Kernlage aus einem Kunststoff und wenigstens zwei Decklagen aus einem metallischen Werkstoff aufweist, gelöst, wobei die Kernlage des Verbundmaterials im Bereich des zu formenden Bördelfalzes zumindest abschnittsweise auf eine Temperatur von 180°C bis 300°C erwärmt wird, wie im anliegenden Anspruch 1 angegeben. Vorteilhafte Weiterbildungen der Erfindung sind in dem Unteransprüchen offenbart.

Erfindungsgemäß wurde erkannt, dass durch die Einwirkung von Wärme bei einer Temperatur von 180°C bis 300°C die Festigkeit der Kunststoffkernlage herabgesetzt werden kann. Ein Bördelfalz ist dadurch gekennzeichnet, dass im Bereich des Bogens das Material mit einem sehr kleinen Radius umgeformt wird. Dabei legt die äußere Decklage einen größeren Umfang zurück als die innere Decklage. Dadurch muss die äußere Decklage gedehnt werden, was zu hohen Zugspannungen führt, welche zum Versagen des Materials der äußeren Decklage führen können. Dieser Effekt ist umso kritischer, je dicker die Kernlage und je dünner die Decklagen sind.

Durch die Erwärmung des Verbundmaterials wird die Festigkeit der Kernlage soweit reduziert, dass sie beim Bördeln durch die von dem Bördelwerkzeug ausgeübten Druckkräfte teilweise verdrängt werden kann. Dies ändert die Geometrie des Bördelfalzes dahingehend, dass die äußere Decklage einen geringeren Umfang, im Vergleich zur Situation mit einer nicht erwärmten Kernschicht, zurücklegen muss. Dadurch werden die Spannungen in den Decklagen und damit die Gefahr des Versagens der äußeren und der inneren Decklage reduziert. Der Ausschuss an mehrlagigem Verbundmaterial, dessen Decklagen Risse, Brüche oder ähnliches im Bereich des Bördelfalzbogens aufweist, kann somit gemindert werden, was insbesondere einen ökonomischen Vorteil bringt.

Es ist im Rahmen der Erfindung unerheblich, wie die Kernlage während des Umformprozesses auf die Temperatur zwischen 180°C und 300°C erwärmt wird. Die Wärme wird vorzugsweise durch Wärmeleitung, Induktion oder Strahlung in die Decklagen eingebracht und von dort über Wärmeleitung in die Kernlage weitergeführt. Die Erwärmung der Decklage ist dabei für das Bördeln nicht vorteilhaft und nicht unbedingt erwünscht. Da es sich aber nicht vollständig vermeiden lässt, wird ein Temperaturbereich bevorzugt, bei dem die Werkstoffeigenschaften der metallischen Decklagen nur unwesentlich und gleichzeitig die Werkstoffeigenschaften der Kernlage stark verändert werden. Vorteilhafter Weise wird der Temperaturzustand der Kernlage vor und nach dem Umformen sowie während des Umformens gemessen. Auf diese Weise kann eine sichere Prozessführung gewährleistet werden.

Die beiden Decklagen können aus dem gleichen metallischen Werkstoff oder aus verschiedenen metallischen Werkstoffen gefertigt sein. Die Verwendung des gleichen metallischen Werkstoffs führt zu einem Verbundmaterial mit symmetrischem Aufbau, was insbesondere die Weiterverarbeitung des Verbundmaterials erleichtern kann. Durch die Verwendung unterschiedlicher metallischer Werkstoffe wiederum kann das Verbundmaterial sehr flexibel auf unterschiedliche Anforderungen an die beiden Decklagen in unterschiedlichen Weiterverarbeitungsschritten bzw. Gebrauchsschritten angepasst werden.

In einer vorteilhaften Ausführungsform des Verfahrens wird die Erwärmung auf eine Temperatur von 200°C bis 260°C vorgenommen. Auf diese Weise kann ein Ausgleich zwischen der durch die Wärme bewirkten erniedrigten Festigkeit des Kunststoffs und der Beständigkeit des Kunststoffs erreichen. Eine hohe Temperatur im Bereich von 300°C gewährleistet eine maximale Festigkeitsreduktion, ohne das Gefüge des Kunststoffs selbst irreversibel, gegebenenfalls irreparabel in Anspruch zu nehmen. Durch die ausgeprägte Verringerung der Festigkeit wird die Verdrängung des Kunststoffmaterials während des Umformens begünstigt. Eine im Rahmen der vorliegenden Erfindung definierte moderate Erhöhung der Temperatur von 180°C hingegen stellt sicher, dass - bei immer noch hinreichend gutem Umformvermögen des Verbundmaterials zu Bördelfalzen mit kleinen Radien - das Gefüge des Kunststoffs und damit die Beständigkeit des Kunststoffs während des Umformens in hohem Maße bewahrt wird. Durch die Wahl einer Temperatur zwischen 200°C und 260°C kann das Verfahren beiden Anforderungen gerecht werden.

Vorzugsweise wird der Erwärmungsvorgang vor dem Beginn des Umformvorgangs beendet. Auf diese Weise können die Phase des Erwärmens und die Phase des Formens des Bördelfalzes in den erwärmten Bereich des Verbundmaterials getrennt werden. Ein sicherer Prozessablauf kann somit besonders vorteilhaft gewährleistet werden. Die zur Erwärmung des Verbundmaterials eingesetzten Vorrichtungen können beispielsweise von dem Verbundmaterial entfernt werden, so dass genügend Platz für die Umformwerkzeuge bzw. Bördelwerkzeuge zur Verfügung steht. Da der Umformvorgang grundsätzlich wenig Zeit in Anspruch nimmt, ist eine übermäßige Abkühlung des erwärmten Verbundmaterials nicht zu erwarten.

Es ist aber alternativ auch möglich, den Erwärmungsvorgang zumindest zeitweise während des Umformvorgangs vorzunehmen. Auf diese Weise kann das Verfahren zum Formen eines Bördelfalzes sehr zeiteffizient ausgeführt werden. Denn die Aufwärmphase, also die Zeit, welche für das Aufwärmen mindestens des Kunststoffs aufzuwenden ist, und der Umformvorgang laufen zumindest zeitweise parallel ab. So können beispielsweise auch die Vorrichtungen zum Aufwärmen und die Vorrichtungen zum Bördeln in einer Multifunktionsvorrichtung vereint werden. Das Bördelwerkzeug kann somit auch mit einem Heizelement ausgestattet werden, welches seine Wärmeenergie zumindest zeitweise während des Umformens auf das Verbundmaterial übertragt. Diese Variante soll die Flexibilität des erfindungsgemäßen Verfahrens verdeutlichen.

Vorzugsweise ist der metallische Werkstoff der Decklagen ein Stahl oder eine, insbesondere höherfeste oder höchstfeste Stahllegierung. Dadurch können sich die Eigenschaften der unterschiedlichen Materialien der Kernlage und der Decklagen vorteilhaft ergänzen, insbesondere wenn ein Verbundmaterial erforderlich ist, welches eine bestimmte Mindestdicke aufweisen, dessen Gewicht allerdings eine bestimmte Höchstgrenze nicht übersteigen soll. Durch die Verwendung eines Stahls oder einer, insbesondere höherfesten oder höchstfesten Stahllegierung werden diese Anforderungen vorteilhaft erfüllt. Denn die Decklagen aus einem Stahl oder einer Stahllegierung bieten eine hohe Festigkeit bzw. Steifigkeit, wohingegen die Kernlage aus einem Kunststoff zur Einstellung einer bestimmten Dicke des Verbundmaterials verwendet werden kann, und trotzdem auf Grund der geringen Dichte des Kunststoffs lediglich einen vergleichsweise geringen Beitrag zum Gesamtgewicht des Verbundmaterials leistet. Darüber hinaus bieten Stähle oder Stahllegierungen eine gute Korrosionsbeständigkeit, ein gutes Umformverhalten und eignen sich insbesondere zum Schweißen.

In einer weiteren vorteilhaften Ausführungsform des Verfahrens können die Decklagen identische oder voneinander abweichende Dicken aufweisen. Auf diese Weise kann das Verbundmaterial an auf die beiden Decklagen einwirkende, unterschiedliche Belastungen angepasst werden. Eine Ausgestaltung mit identischen Dicken erleichtert speziell die Weiterverarbeitung des Verbundmaterials, da das Verbundmaterial keine Vorzugsrichtung aufweist, sondern im Wesentlichen symmetrisch ist.

Vorzugsweise weist die Kernlage eine um den Faktor 2 bis 5 größere Dicke als die dickste Decklage auf. Auf diese Weise wird ein besonders geeignetes Verhältnis zwischen dem Gewicht des Verbundmaterials und der Festigkeit bzw. Steifigkeit des Verbundmaterials erzielt. Auch lassen sich so vorteilhafte wärmedämmende und vibrationsdämpfende Eigenschaften erreichen. Beispielsweise kann die Kernlage aus einem Kunststoff eine Dicke von 0,75 mm aufweisen, wohingegen die Decklagen aus einem metallischen Werkstoff etwa 0,25 mm dick sind. Dies entspräche einem Verhältnis von etwa 3 zu 1. Die Gesamtdicke des Verbundmaterials außerhalb eines während des Umformvorgangs erzeugten Bördelfalzes läge somit bei etwa 1,25 mm. Diese Dicke verleiht dem Verbundmaterial Eigenschaften, wie sie im Automobilbau, insbesondere Karosseriebau, für die Fertigung von Trägerelementen oder Profilelementen bevorzugt sind.

Nach einer weiteren bevorzugten Ausführungsform des Verfahrens besteht die Kernlage aus einem geschäumten Kunststoff. In vorteilhafter Weise ist der Kunststoff (das Polymer) mit Gas-Einschlüssen versehen, vorzugsweise mit Luft, Kohlenstoffdioxid (CO₂), Stickstoff oder einem anderen Inertgas oder Edelgas. Der Vorteil besteht darin, dass im erwärmten Zustand der Kunststoff nicht nur teilweise zur Seite verdrängt werden kann, sondern in sich auch kompressibel ist. Dadurch kann der Falzbereich noch besser deformiert und damit die Spannungen in den Decklagen weiter reduziert werden.

Gemäß einer weiteren Lehre der vorliegenden Erfindung wird die Aufgabe auch durch ein mehrlagiges, mindestens einen Bördelfalz aufweisendes Verbundmaterial mit wenigstens einer Kernlage aus einem Kunststoff und wenigstens zwei Decklagen aus einem metallischen Werkstoff gelöst, bei dem die Kernlage im Bereich des Bogens des Bördelfalzes gegenüber den Bereichen außerhalb des Bogens des Bördelfalzes verjüngt ist.

Dies führt dazu, dass die äußere Decklage einen geringeren Umfang zurücklegen muss. Dadurch werden die Spannungen in den Decklagen und damit die Gefahr des Versagens der äußeren und der inneren Decklage reduziert.

Vorzugsweise ist der metallische Werkstoff der Decklagen ein Stahl oder eine, insbesondere höherfeste oder höchstfeste Stahllegierung. Dadurch können sich die Eigenschaften der unterschiedlichen Materialien der Kernlage und der Decklagen vorteilhaft ergänzen, insbesondere wenn ein Verbundmaterial erforderlich ist, welches eine bestimmte Mindestdicke aufweisen, dessen Gewicht allerdings eine bestimmte Höchstgrenze nicht übersteigen soll. Durch die Verwendung eines Stahls oder einer, insbesondere höherfesten oder höchstfesten Stahllegierung werden diese Anforderungen vorteilhaft erfüllt. Denn die Decklagen aus einem Stahl oder einer Stahllegierung bieten eine hohe Festigkeit bzw. Steifigkeit, wohingegen die Kernlage aus einem Kunststoff zur Einstellung einer bestimmten Dicke des Verbundmaterials verwendet werden kann, und trotzdem auf Grund der geringen Dichte des Kunststoffs lediglich einen vergleichsweise geringen Beitrag zum Gesamtgewicht des Verbundmaterials leistet. Darüber hinaus bieten Stähle oder Stahllegierungen eine gute Korrosionsbeständigkeit, ein gutes Umformverhalten und eignen sich insbesondere zum Schweißen.

In einer weiteren vorteilhaften Ausgestaltung des mehrlagigen Verbundmaterials können die Decklagen identische oder voneinander abweichende Dicken aufweisen. Auf diese Weise kann das Verbundmaterial an auf die beiden Decklagen einwirkende, unterschiedliche Belastungen angepasst werden. Eine Ausgestaltung mit identischen Dicken erleichtert speziell die Weiterverarbeitung des Verbundmaterials, da das Verbundmaterial keine Vorzugsrichtung aufweist, sondern im Wesentlichen symmetrisch ist.

Vorzugsweise weist die Kernlage eine um den Faktor 2 bis 5 größere Dicke als die dickste Decklage auf. Auf diese Weise wird ein besonders geeignetes Verhältnis zwischen dem Gewicht des Verbundmaterials und der Festigkeit bzw. Steifigkeit des Verbundmaterials erzielt. Auch lassen sich so vorteilhafte wärmedämmende und vibrationsdämpfende Eigenschaften erreichen. Beispielsweise kann die Kernlage aus einem Kunststoff eine Dicke von 0,75 mm aufweisen, wohingegen die Decklagen aus einem metallischen Werkstoff etwa 0,25 mm dick sind. Dies entspräche einem Verhältnis von etwa 3 zu 1. Die Gesamtdicke des Verbundmaterials außerhalb eines während des Umformvorgangs erzeugten Bördelfalzes läge somit bei etwa 1,25 mm. Diese Dicke verleiht dem Verbundmaterial Eigenschaften, wie sie im Automobilbau, insbesondere Karosseriebau, für die Fertigung von Trägerelementen oder Profilelementen bevorzugt sind.

Besonders bevorzugt ist die Verwendung des mehrlagigen, mindestens einen Bördelfalz aufweisenden Verbundmaterials in der Automobilherstellung, insbesondere Karosserieherstellung, für die Fertigung eines Trägerelements oder Profilelements. Denn dort lassen sich die vorteilhaften gewichtssparenden Eigenschaften sowie die durch die Decklagen bewirkten Festigkeits- bzw. Steifigkeitseigenschaften vorteilhaft kombinieren und einsetzen.

Es gibt nun vielfältige Möglichkeiten, das erfindungsgemäße Verfahren und das erfindungsgemäße mehrlagige Verbundmaterial auszugestalten und weiterzubilden. Hierzu wird beispielsweise auf die den Ansprüchen 1 und 9 nachgeordneten Unteransprüche verwiesen. Im Folgenden wird die Erfindung an Hand von in einer Zeichnung dargestellten Ausführungsbeispielen näher erläutert. In der Zeichnung zeigen:
- Fig. 1: eine Querschnittsansicht eines dreilagigen Verbundmaterials,
- Fig. 2: eine Querschnittsansicht eines dreilagigen, einen Bördelfalz aufweisenden Verbundmaterials, wie es aus dem Stand der Technik bekannt ist, und
- Fig. 3: eine Querschnittsansicht eines dreilagigen, einen Bördelfalz aufweisenden Verbundmaterials gemäß der vorliegenden Erfindung.

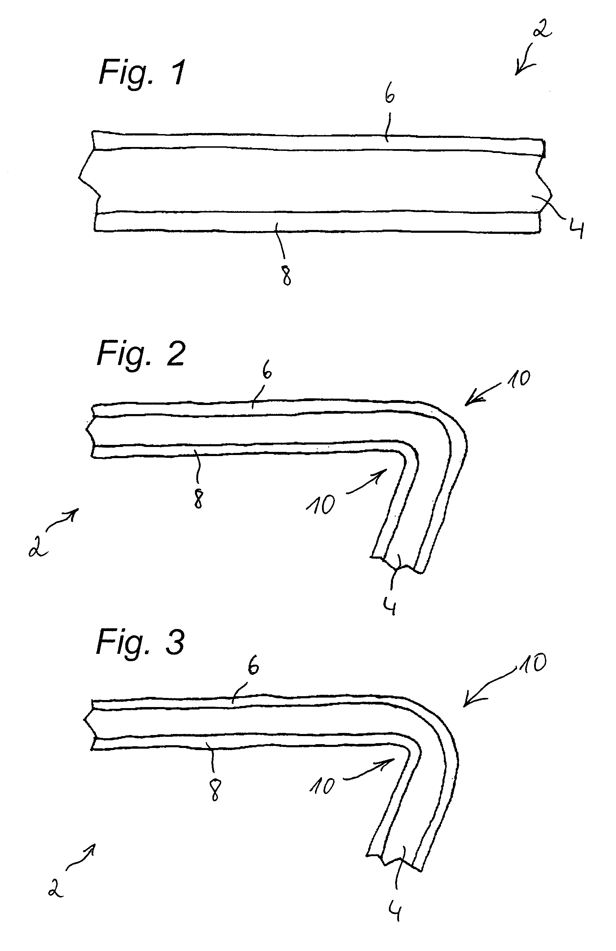

Fig. 1 zeigt in einer Querschnittsansicht einen Ausschnitt eines beispielhaften dreilagigen Verbundmaterials 2, welches verwendet werden kann, um darin einen Bördelfalz einzuformen. Die Kernlage 4 besteht aus einem Kunststoff und weist beispielsweise eine Dicke von 0,75 mm auf. Beidseitig der Kernlage 4 ist jeweils eine Decklage 6, 8 aus einem Stahl angeordnet. Es können auch, insbesondere höherfeste oder höchstfeste Stahllegierungen als Material der Decklagen 6, 8 verwendet werden. Die Decklagen 6, 8 weisen in diesem Beispiel identische Dicken von etwa 0,25 mm auf, können jedoch auch mit voneinander abweichenden Dicken ausgebildet werden. Die Kernlage 4 weist allgemein vorzugsweise eine Dicke auf, welche um den Faktor 2 bis 5 größer als die Dicke der dicksten Decklage 6, 8 ist. Es ist ferner möglich, zwischen den beiden Decklagen 6, 8 mehr als eine Kernlage 4 vorzusehen, wenn dies für die Anwendung zweckmäßig ist. Weitere Kernlagen 4 wären dann vorzugsweise ebenfalls aus einem Material mit vergleichsweise geringer Dichte, wie beispielsweise einem Kunststoff, zu bilden.

Fig. 2 zeigt nun das aus Fig. 1 bekannte, dreilagige Verbundmaterial 2, wenn es auf hergebrachte Weise mit einem Bördelfalz versehen worden ist. In Fig. 2 ist der im Vergleich zu einer mittels Tiefziehen bewirkten Umformung kleine Radius des Bogens 10 des Bördelfalzes erkennbar. Durch die Verwendung einer hergebrachten, das Materialgefüge nicht berücksichtigenden Methode, einen Bördelfalz zu formen, gleicht die Dicke der Kunststoffkernlage 4 im Bereich des Bogens 10 des Bördelfalzes im Wesentlichen der Dicke, wie sie außerhalb des Bogens 10 des Bördelfalzes vorliegt und damit auch, wie sie vorlag, bevor der Bördelfalz in das dreilagige Verbundmaterial 2 eingeformt wurde. Dies kann jedoch auf Grund der vergleichsweise hohen Belastung zum Versagen des Materials der Decklagen 6, 8 aus Stahl im Bereich des Bogens 10 des Bördelfalzes führen, wodurch die Gefahr von Rissen oder Brüchen in den Decklagen 6, 8 an dieser Stelle erhöht ist.

Im Gegensatz dazu zeigt Fig. 3 das dreilagige Verbundmaterial 2, wie es aus Fig. 1 bekannt ist, wenn ein Bördelfalz mit dem Verfahren gemäß der vorliegenden Erfindung in das Verbundmaterial 2 eingeformt worden ist. Durch die Erwärmung wenigstens des Materials der Kernlage 4 auf eine Temperatur zwischen 180°C und 300°C, insbesondere 200°C und 260°C wird die Festigkeit des Kunststoffs reduziert. Durch den bei dieser Temperatur ausgeführten Bördelvorgang kann das Material der Kernlage 4 aus dem Bereich des Bogens 10 des zu formenden Bördelfalzes teilweise verdrängt werden. Dadurch legt die äußere Decklage 6 einen geringeren Umfang als im Vergleich zum Beispiel in Fig. 2 zurück, wodurch die Spannungen und die Gefahr des Versagens der Decklagen 6, 8 insbesondere im Bereich des Bogens 10 des zu formenden Bördelfalzes reduziert werden können. Demnach ist die Kernlage 4 im Bereich des Bogens 10 des geformten Bördelfalzes gegenüber den Bereichen außerhalb des Bogens 10 des Bördelfalzes verjüngt. Auf diese Weise kann insbesondere die Prozesssicherheit des Verfahrens sowie die Integrität des mehrlagigen Verbundmaterials 2 erhöht werden.

## Patentansprüche

1. Verfahren zum Formen eines Bördelfalzes in ein mehrlagiges Verbundmaterial, welches wenigstens eine Kernlage (4) aus einem Kunststoff und wenigstens zwei Decklagen (6, 8) aus einem metallischen Werkstoff aufweist,
**dadurch gekennzeichnet, dass** die Kernlage des Verbundmaterials im Bereich des zu formenden Bördelfalzes zumindest abschnittsweise auf eine Temperatur von 180°C bis 300°C erwärmt wird, um die Festigkeit des Kunststoffs zu reduzieren, wodurch das Material aus dem Bereich des Bördelfalzes teilweise verdrängt wird.

2. Verfahren nach Anspruch 1,
**dadurch gekennzeichnet, dass** die Erwärmung auf eine Temperatur von 200°C bis 260°C vorgenommen wird.

3. Verfahren nach Anspruch 1 oder 2,
**dadurch gekennzeichnet, dass** der Erwärmungsvorgang vor dem Beginn des Umformvorgangs beendet wird.

4. Verfahren nach Anspruch 1 oder 2,
**dadurch gekennzeichnet, dass** der Erwärmungsvorgang zumindest zeitweise während des Umformvorgangs vorgenommen wird.

5. Verfahren nach einem der Ansprüche 1 bis 4,
**dadurch gekennzeichnet, dass** der metallische Werkstoff der Decklagen ein Stahl oder eine Stahllegierung ist.

6. Verfahren nach einem der Ansprüche 1 bis 5,
**dadurch gekennzeichnet, dass** die Decklagen identische oder voneinander abweichende Dicken aufweisen.

7. Verfahren nach einem der Ansprüche 1 bis 6,
**dadurch gekennzeichnet, dass** die Kernlage eine um den Faktor 2 bis 5 größere Dicke als die dickste Decklage aufweist.

8. Verfahren nach einem der Ansprüche 1 bis 7,
**dadurch gekennzeichnet, dass** die Kernlage aus einem geschäumten Kunststoff besteht, welcher insbesondere Gas-Einschlüsse aufweist.

## Claims

1. Method for forming a beading fold in a multi-layer composite material, which has at least one core layer (4) made of a plastics material and at least two cover layers (6, 8) made of a metallic material, **characterised in that** the core layer of the composite material is heated, at least in portions, to a temperature of 180°C to 300°C in the region of the beading fold to be formed in order to reduce the strength of the plastics material whereby the material of the core layer is partially displaced from the region of the beading fold.

2. Method according to claim 1, **characterised in that** the heating is carried out to a temperature of 200°C to 260°C.

3. Method according to claim 1 or 2, **characterised in that** the heating process is ended before the beginning of the forming process.

4. Method according to claim 1 or 2, **characterised in that** the heating process is carried out at least temporarily during the forming process.

5. Method according to any one of claims 1 to 4, **characterised in that** the metallic material of the cover layers is a steel or a steel alloy.

6. Method according to any one of claims 1 to 5, **characterised in that** the cover layers have thicknesses which are identical or differ from one another.

7. Method according to any one of claims 1 to 6, **characterised in that** the core layer has a thickness which is greater by the factor of 2 to 5 than the thickest cover layer.

8. Method according to any one of claims 1 to 7, **characterised in that** the core layer consists of a foamed plastics material, which, in particular, has gas inclusions.

## Revendications

1. Procédé pour former un pli de bordage dans un matériau composite multi-couches, lequel présente au moins une couche de noyau (4) en un matériau plastique et au moins deux couches superficielles (6, 8) en un matériau métallique,
**caractérisé en ce que**
la couche de noyau du matériau composite est chauffée au niveau du pli de bordage à former au moins par tronçons à une température de 180°C à 300°C, pour réduire la rigidité du matériau plastique, ce par quoi le matériau est partiellement refoulé en-dehors de la zone du pli de bordage.

2. Procédé selon la revendication 1,
**caractérisé en ce que**
le chauffage est effectué à une température de 200°C à 260°C.

3. Procédé selon la revendication 1 ou 2,
**caractérisé en ce que**
la procédure de chauffage est terminée avant le début de la procédure de formage.

4. Procédé selon la revendication 1 ou 2,
**caractérisé en ce que**
la procédure de chauffage est effectuée au moins par intermittence pendant la procédure de formage.

5. Procédé selon l'une des revendications 1 à 4,
**caractérisé en ce que**
le matériau métallique des couches superficielles est un acier ou un alliage d'acier.

6. Procédé selon l'une des revendications 1 à 5,
**caractérisé en ce que**
les couches superficielles présentent des épaisseurs identiques ou divergeant l'une de l'autre.

7. Procédé selon l'une des revendications 1 à 6,
**caractérisé en ce que**
la couche de noyau présente une épaisseur supérieure d'un facteur de 2 à 5 à la couche superficielle la plus épaisse.

8. Procédé selon l'une des revendications 1 à 7,
**caractérisé en ce que**
la couche de noyau est en matériau plastique moussé, lequel présente en particulier des inclusions de gaz.
